# EUROPEAN PATENT APPLICATION

(11) **EP 3 723 259 A1**
(43) Date of publication of application: **14.10.2020**
(21) Application number: 19168415.8
(22) Date of filing: 10.04.2019
(51) Int. Cl.: H02M 3/335, H02M 1/34

(54) **SWITCHED MODE POWER SUPPLY**

(71) Applicant: FRIWO Gerätebau GmbH, 48346 Ostbevern (DE)
(72) Inventor: POMP-MELCHERS, Tobias, 48159 Münster (DE)
(74) Representative: Grünecker Patent- und Rechtsanwälte PartG mbB

(57) **Abstract**

The present disclosure relates to a switch mode power supply, SMPS, converter supplying a DC output voltage, the power converter comprising a main transformer adapted to connect to an input source, an energy absorbing circuit connected to a primary winding of the SMPS transformer, an auxiliary SMPS transformer connected to the energy absorbing circuit, wherein the auxiliary SMPS is powered by the energy stored in the energy absorbing circuit.

## Description

The present invention relates generally to switched mode power supplies, and specifically to switched mode power supplies with recyclable snubber voltage.

Power converters or power supplies are well known subjects to electronics engineers. Integrated circuit (IC) chips used in electronic circuits need standard DC voltages of fixed magnitude. Many of these circuits need well-regulated DC supply for their proper operation. In majority of the cases, the required voltages are of magnitudes varying between -18V to +18V. Some equipment may need multiple output power supplies. For example, in a personal computer one may need 3.3V, ±5 V and ±12 V power supplies. The digital ICs may need 3.3 V supply and the hard disk drive or the floppy driver may need ±5 and ±12 V supplies. The individual output voltages from the multiple output power supply may have different current ratings and different voltage regulation requirements. Almost invariably these outputs are isolated DC voltages where the DC output is isolated from the input supply. In case of multiple output supplies ohmic isolation between two or more outputs may be desired. The input connection to these power supplies is often taken from the standard utility power plug point (AC voltage of 115V / 60Hz or 230V / 50Hz). It may not be unusual, though, to have a power supply working from any other voltage level which could be of either AC or DC type. There are two broad categories of power supplies: Linear regulated power supply and switched mode power supply (SMPS). In some cases, one may use a combination of switched mode and linear power supplies to gain some desired advantages of both the types.

Like a linear power supply, the switched mode power supply too converts the available unregulated AC or DC input voltage to a regulated DC output voltage. However, in case of SMPS with input supply drawn from the AC mains, the input voltage is first rectified and filtered using a capacitor at the rectifier output. The unregulated DC voltage across the capacitor is then fed to a high frequency DC-to-DC converter. Most of the DC-to-DC converters used in SMPS circuits have an intermediate high frequency AC conversion stage to facilitate the use of a high frequency transformer for voltage scaling and isolation. In contrast, in linear power supplies with input voltage drawn from AC mains, the mains voltage is first stepped down (and isolated) to the desired magnitude using a mains frequency transformer, followed by rectification and filtering. The high frequency transformer used in a SMPS circuit is much smaller in size and weight compared to the low frequency transformer of the linear power supply circuit. The switched mode power supply owes its name to the DC-to-DC switching converter for conversion from unregulated DC input voltage to regulated DC output voltage. The switch employed is turned 'ON' and 'OFF' (referred as switching) at a high frequency. During 'ON' mode the switch is in saturation mode with negligible voltage drop across the collector and emitter terminals of the switch where as in 'OFF' mode the switch is in cut-off mode with negligible current through the collector and emitter terminals. On the contrary the voltage- regulating switch, in a linear regulator circuit, always remains in the active region.

The fly-back converter topology is the most commonly used SMPS circuit for low output power applications where the output voltage needs to be isolated from the input main supply. The output power of fly-back type SMPS circuits may vary from few watts to less than 100 W. The overall circuit topology of this converter is considerably simpler than other SMPS circuits. Input to the circuit is generally unregulated DC voltage obtained by rectifying the utility AC voltage followed by a simple capacitor filter. The circuit can offer single or multiple isolated output voltages and can operate over wide range of input voltage variation.

In respect of energy-efficiency, fly-back power supplies is not preferred compared to many other SMPS circuits but its simple topology and low cost make it popular in low output power range. In many applications, power supplies for electronics must operate from a battery voltage which can get as low as 7 V when the ambient air temperature is below freezing, even down to 3.5V when a starter is activated. Most modern electronic circuits operate on standard voltages such as +12V, +5V, and -12V. Therefore a buck-type or boost-type switch-mode power supply (SMPS) cannot be used alone in automotive applications. As a result of low minimum battery voltages, the current level that a SMPS has to deal with can be very high, in the tens of amperes for an output power of just about 50-100 W.

Conventional approaches to SMPS, such as the forward converter taught in U.S. Pat. No. 4,870,555, or the push-pull converter taught in U.S. Pat. No. 5,140,509, or a flyback SMPS result in high losses in the MOSFET switches, and in the snubber networks, even in the so-called "lossless" snubbers or active core reset circuits. In such a lossless snubber, a current of 20 A through a Schottky rectifier would result in over 5 W of heat dissipation in that rectifier Therefore the requirements of high efficiency, small size and may not be easily met. These requirements apply even more relevantly to portable equipment operating from lower voltage battery such as portable camera and boom boxes, and home/office equipment such uninterruptable power supplies (UPS) and battery-operated appliances.

Thus, there is a need for a better approach to power supplies for automotive, portable and mobile applications, or in general for battery-operated electronics. Such power demand is common for some high power audio amplifiers, inverters, and computer-controlled systems. Nearly all power supplies have integrated circuits to provide one or several of the following aspects: regulation, measuring, amplification, communication. All these parts need to be powered and create therefore losses which result in a lower efficiency as well as higher no load power consumption. These losses are also increased as the needed power is sourced by a low efficient source.

Based on increasing demand for a high efficiency and low no load power consumption but at the same time having more and more complex (more parts) SMPS (Switch Mode Power Supplies), these SMPS are difficult to realize. Fulfilling this requirement is cost intensive and technically complicated. State of the art SMPS use snubber circuits to protect the switching elements and other components from high voltage peaks generated by inductive components being switched. These snubber circuits, build up typically by a diode in series with an RC element while the C has additional in parallel a discharge resistor connected, convert the power that is inside the inductive switching peak into thermal heat and thus losses. These losses are unwanted but necessary for peak limitation. The losses decrease efficiency and the thermal heat forces the use of bigger heat sinks and or more space and or reduces the life time of the SMPS.

One of the objects of the present disclosure is to provide a solution that solves these two disadvantages.

To supply the components of the main power supply, it is common to use simple auxiliary power supplies connected to the main or separate electrolytic capacitors (behind the rectifier or PFC supplied by the grid) of the main power supply (often Buck topology). Some disadvantages are: These need sometimes extra EMI filter elements as well as a separate electrolytic capacitor since the main SMPS capacitors cannot be used. These are often low efficient based on the point that the power delivered by this auxiliary SMPS is low and compared to its internal losses the possible efficiency is limited P_out/(P_out + P_losses). These losses are e.g. startup resistors, current (from high voltage grid) for sourcing its regulation elements etc. The no load power consumption is high. The losses of the main SMPS are increased by the efficiency of the auxiliary SMPS (e.g. main SMPS has 500mW losses produced by its through auxiliary SMPS sourced components. As this auxiliary SMPS has an efficiency of e.g. 10% it will increase the losses by factor 10 to 5W). The overall efficiency of the whole SMPS (main + aux) is decreased by these losses as well. Moreover the main power supply can provide power for its extra components, using extra supply windings on the transformer. Some disadvantages are, this voltages can only be provided after the startup of the main SMPS. For example as the main SMPS is in fault mode (stop switching) or the secondary voltage is in constant current mode and on an low voltage level the auxiliary voltages break down as well and therefore the main SMPS regulation stops operation (fold back).

The present disclosure is using the energy from the switching peak of the inductive component, here the primary main winding, of the main SMPS that is normally converted to heat by the known snubber to provide a recyclable intermediate snubber voltage. The present disclosure could work on similar losses creating sources as well. Using the common known snubber combination of diode in series resistor and capacitor will always act the same (passive) way no matter which max voltage peak occur. The common known snubber is designed to limit the voltage peaks height even in worst case conditions to an acceptable level. This does necessarily means it will create losses even as the conditions are good and the voltage peaks would be in an acceptable range even without a snubber or a snubber with a light setting for loss creation. Therefore especially on part load operation mode where often the peaks are limited by reduced magnetic induction the common known snubber is a big disadvantage.

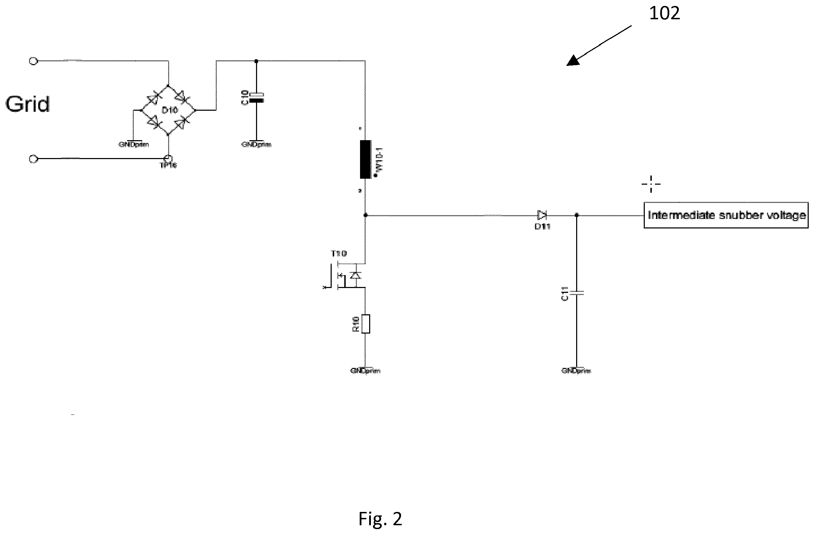

It is desired that the snubber is a very fast acting circuit therefore defining a threshold to switch this kind of snubber on or off in operation while the peak rises is not applicable. As shown in Figure 2 using the D11 C11 recyclable snubber combination still allows the fast acting behavior because the voltage limitation per peak is given by the D11 C11 combination. The demand to limit the offset of C11 can be decided over a period of several switching cycles and gives no need for very fast parts or calculation.

Accordingly, a SMPS of the present disclosure has following objects and advantages:
(a) to recycle the energy providing the auxiliary voltages (aux power) needed to power the parts of the main SMPS as well as additional internal or external parts;
(b) to recycle (transfer) the energy to the primary capacitor (main SMPS) to be reused for power conversion, that is to recycle the energy from the inductive peaks created by the main SMPS circuit,
(c) to provide a snubber on demand that is to only limit the voltage peaks as it is necessary, while considering the main SMPS input voltage and other parameters of the power supply;
(d) to reduces electromagnetic sensitivity immunity/emission of the main and aux SMPS. That is to say the SMPS power supply according to the present disclosure reduces the Electromagnetic Interference (EMI). That reduction can also be programmed on demand e.g. at special load conditions (algorithm) that are known to be EMI problematic.
(e) the energy absorbing circuit - diode and capacitor - substitutes the task performed by a snubber circuit connected in parallel with the primary transformer of the flyback topology.
(f) thus substitution of the snubber circuit, saves energy, reduces heat dissipation, reduces EMI and provides a recyclable voltage which can be used inside the SMPS.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

The invention is explained in greater detail below with reference to embodiments and the appended drawings. Elements or components which have an identical, univocal or similar construction and/or function are referred to in various Figures of the drawings with the same reference numerals.

In a preferred embodiment of the disclosed invention disclosed is a switch mode power supply SMPS, converter adapted to supply a DC output voltage, comprising a main transformer adapted to connect to an input source an energy absorbing circuit connected to a primary winding of the main transformer, wherein the energy absorbing circuit comprises a diode and a capacitor connected in series; an auxiliary SMPS connected to the energy absorbing circuit, wherein the auxiliary SMPS is powered by the energy stored in the energy absorbing circuit.

In an another preferred embodiment of the disclosed invention disclosed is a SMPS converter arranged according to flyback topology comprising the main transformer and a switch connected in series to a primary winding of the main transformer.

In an another preferred embodiment of the disclosed invention disclosed is a SMPS converter comprising an on-demand snubber circuit, comprising a voltage measuring circuit comprising a potential divider connected to an adjustable shunt regulator to measure the inductive switching peak voltages in the primary winding of the main transformer and/or the voltage on the energy storage device, wherein the adjustable shunt regulator connected to a first transistor and the first transistor connected to a second transistor, wherein a resistive load is connected to a collector of the second transistor. This load (resistive load in series second transistor) is added on demand onto the energy stored device to limit the voltage height. The adjustable shunt regulator could measure direct the switching peak. Preferably in this embodiment it measures the voltage of the energy absorbing circuit, which is feed by the switching peak.

In an another preferred embodiment of the disclosed invention disclosed is a SMPS converter, comprising an on-demand snubber circuit a voltage measuring circuit comprising a potential divider connected to an adjustable shunt regulator to measure the inductive switching peak voltages in the primary winding of the main transformer and/or the voltage on the energy storage device, wherein the adjustable shunt regulator is connected to a resistive load or a transistor working in linear mode being set depending on the load needed or a constant voltage load.

In an another preferred embodiment of the disclosed invention disclosed is a SMPS converter wherein the energy of the energy absorbing circuit is fed back to the primary winding of the main transformer of the SMPS converter.

In an another preferred embodiment of the disclosed invention disclosed is a SMPS converter wherein the energy of the energy absorbing circuit is fed back to the primary winding of the main transformer through a secondary winding of the auxiliary SMPS.

In an another preferred embodiment of the disclosed invention disclosed is a SMPS converter wherein the second secondary winding of the auxiliary SMPS is connected to an inductive element, wherein the inductive element is a feedback buck coil and a feedback buck discharge diode is connected in parallel to the secondary winding of the auxiliary SMPS. Within this embodiment a third secondary winding, can also at the same time provide an auxiliary voltage.

In an another preferred embodiment of the disclosed invention disclosed is a SMPS converter, wherein the energy of the energy absorbing circuit is fed to a secondary winding of the main transformer through a bidirectional switch in the energy absorbing circuit instead of a diode.

In an another preferred embodiment of the disclosed invention disclosed is a SMPS converter supplying a DC output voltage to a load, comprising an AC source connected to a full bridge rectifier, wherein an output voltage from the full bridge rectifier is filtered by a main DC capacitor connected to the main transformer; a flyback topology, comprising the said main transformer and a switch connected in series to the main transformer; wherein the said flyback topology is adapted to perform DC to DC conversion and supplying regulated DC voltage to the load; and an energy absorbing circuit, comprising a diode and a capacitor, connected in series with the primary winding of the main transformer of the flyback topology and in parallel with the power converter switch;

In an another preferred embodiment of the disclosed invention disclosed is a SMPS converter, wherein the energy stored in the energy absorbing circuit acts as an additional energy source for an auxiliary SMPS circuit, the auxiliary SMPS circuit comprising: an auxiliary SMPS main transformer adapted to receive energy from the energy absorbing circuit; and a power electronic switch connected in series with a primary winding auxiliary SMPS main transformer, to control the amount of energy flowing into the auxiliary main transformer according to the voltage value present on the capacitor of the of the energy storage device.

In an another preferred embodiment of the disclosed invention disclosed is a SMPS converter, wherein the energy stored in the energy absorbing circuit is fed back into the said main DC capacitor through a third auxiliary transformer winding.

The preferred embodiments of the disclosed invention will be described herein in detail with the following figures:
FIG. 1 shows schematics of a prior art SMPS.
FIG. 2 shows schematics of the first embodiment of a SMPS of the present disclosure.
FIG. 3 shows schematics of the second embodiment of a SMPS of the present disclosure.
FIG. 4 shows schematics of the third embodiment of a SMPS of the present disclosure.
FIG. 5 shows schematics of the fourth embodiment of a SMPS of the present disclosure.
FIG. 6 shows schematics of the fifth embodiment of a SMPS of the present disclosure.
FIG. 7 shows schematics of the sixth embodiment of a SMPS of the present disclosure.
FIG. 8 shows schematics of the seventh embodiment of a SMPS of the present disclosure.

More specifically embodiments of the present disclosure are described below. Note, however, that an excessively detailed description is omitted. For example, a detailed description of an already well-known matter, and a repeated description of substantially identical components is omitted. This is intended to avoid unnecessary redundancies of the following description and facilitate understanding of persons skilled in the art. It should be noted that the inventors provide the accompanying drawings and the following description so that persons skilled in the art can fully understand the present disclosure, and that the accompanying drawings and the following description are not intended to limit the subject matters recited in the claims.

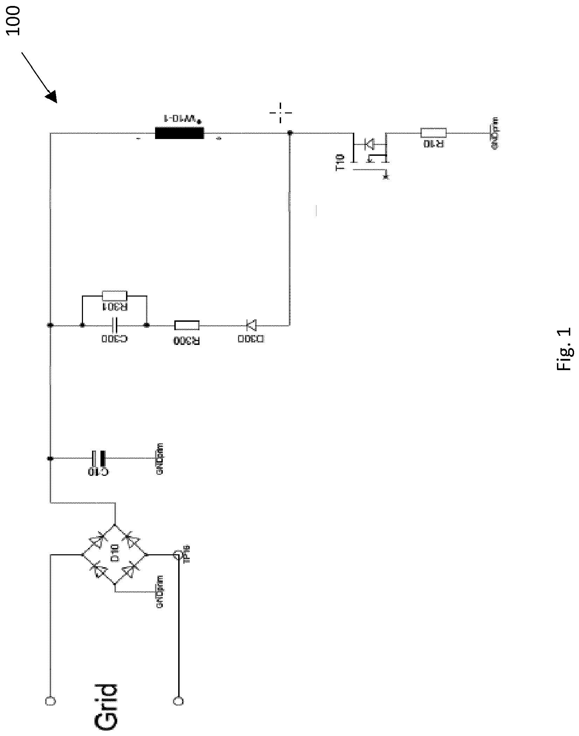

Figure 1 shows a state of the art SMPS 100 using snubber circuits to protect the switching elements and other components from high voltage peaks generated by inductive components being switched. These snubber circuits, typically comprise a diode D300 in series with an RC element (R300, C300) while the capacitor C300 has additional in parallel a discharge resistor R 301. The resistor R301 connected to convert the power that is inside the inductive switching peak into thermal heat and thus losses. These losses are unwanted but necessary for peak limitation. The losses decrease efficiency and the thermal heat forces the use of bigger heat sinks and or more space and or reduces the life time of the SMPS.

Fig 2 shows a schematic of a snubber circuit according to an embodiment of the present disclosure. Instead of the known snubber comprising of R300, 300 the diode D11 acts as a limiter for the voltage peaks. The energy of the peaks is stored in C11. During normal operation of the main SMPS, there are three modes for the transformer W10-1. Mode charge (MC), mode discharge (MD), mode pause (MP).

In mode pause (MP), the capacitor C10 is connected in series by transformer winding W10-1 to the diode D11 and intermediate capacitor C11. Therefore, as pause mode is long enough C11 will be (re)charged to C10 voltage level. During this mode the intermediate voltage can as per needed be fully supplied by C10 and, therefore, the intermediate voltage applied loads.

In mode charge, (MC) T10 drain source is low ohmic and therefore C11 is not charged but stays on the previous voltage level or is being discharged as a load is applied.

In mode discharge (MD) the switch T10 is again OFF and the main transformer discharges its energy to the secondary side electrolytic capacitor. During this period the sum of C10 voltage + the reflected secondary side voltage is applied to D11, C11. Thus, C11 will at the beginning of discharge mode (MD) absorb most of the inductive switching peak and will be further supplied by the reflected voltage as C11 voltage drops to that level during discharge mode.

After several periods (MC, MD, MP) the voltage at C11 still continue to rise based on the inductive peak behavior. The transformer winding W10-1 rises its voltage during switching moment until the current generated on its internal magnetic field reaches its specific level. Therefore, as there is no other load that absorbs the peak energy the voltage rise would be unlimited. Practically, as the voltage rises based on the circuit there are other loads. Therefore, it acts as a source and raises its voltage until the current backwards from W10-1 to in series T10, R10, C10 and back to W10-1 is generated. This behavior creates EMI disturbances as well as part stress. To fulfill the snubber requirements of voltage limitation a load needs to be applied onto the intermediate voltage U(C11). The energy of the switching peak of the inductive component that is stored in the capacitor C11 is energy that would have been converted to heat by a common snubber (see common snubber circuit). Therefore, according to the present disclosure all energy from that reservoir C11 that can be used for powering other parts instead of using power from the grid is directly increasing the efficiency because it prevents losses.

The useable energy before creating new additional consumption is the leakage inductance energy and the peak that is created by fast primary switching while secondary side discharge diodes are not switched on already. During this period the main SMPS winding can also generate an additional peak. Thus, a faster switching (charge to discharge change) can be applied (which causes higher losses based on more needed snubber load) but based on recycling, EMI can be suppressed and losses can be partly reused.

The energy given by C10 and W10-1 while in discharge mode gives the intermediate voltage a buffer to be always able to source connected components. During the charge mode of W10-1, C11 is not buffered externally as T10 is switched on. During this time the C11 voltage can decrease below C10 voltage level. As charge mode is short compared to the sum of charge, discharge and pause mode and C11 capacity value can be adjusted.

The main SMPS emission is filtered by the switching peak. The auxiliary SMPS, based on the fact that it is located behind the W10-1 transformer a reverse L (W10-1) C (C10) (partly also in combination with C11 => CLC filter) filter is created and filters interferences going to grid or coming from grid.

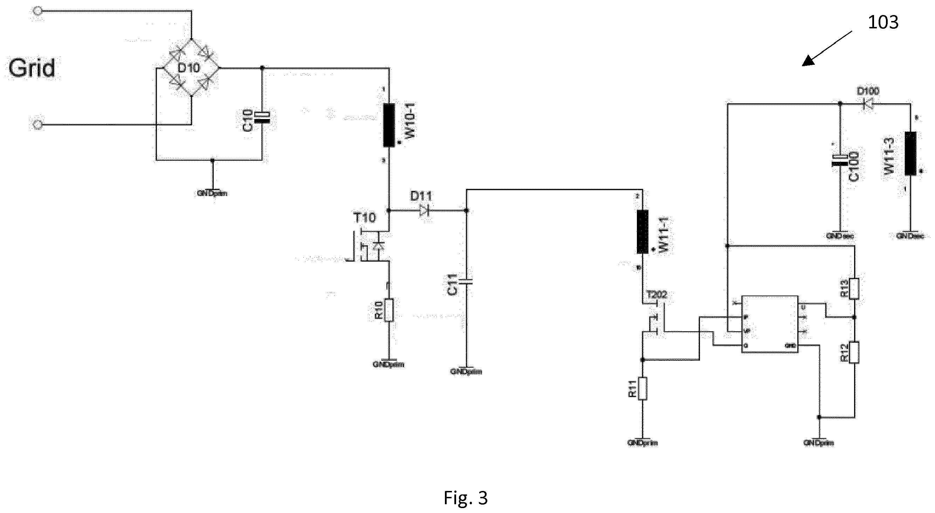

Next the third embodiment of the present disclosure will be described with reference to FIG.3. In FIG.3, C11 is the input of an auxiliary flyback SMPS. The flyback has one or several output windings to generate for components (main and aux SMPS) voltage supply needed to power the components. As the minimum power consumption of the auxiliary supply is high enough it can continuously limit the C11 voltage and therefore W10-1 voltage peak heights. Additionally to or without the option of auxiliary supply voltages, the auxiliary flyback can transfer energy back to the primary C10 and recycles the energy that way.

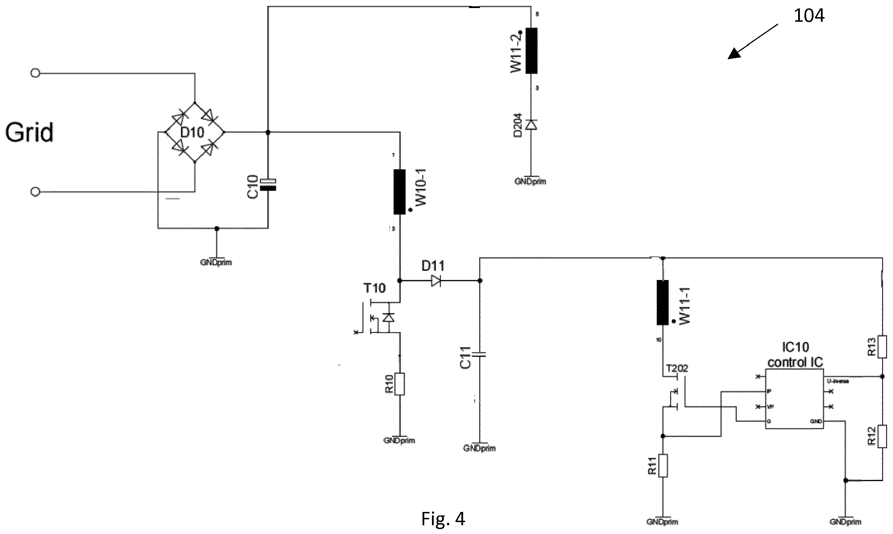

In the fourth embodiment of the present disclosure as shown in FIG. 4, without the option of auxiliary supply voltages the feedback can be done using a separate winding on the auxiliary transformer W11-2 having the winding start connected to C10 positive voltage side while W11-1 winding end is connected to C11 positive voltage side. W11-2 acts like the secondary winding on a typical Flyback topology but its target for the discharged energy is the primary capacitor C10 and therefore the source of main SMPS. Therefore, the energy can be recycled/reused.

The threshold for the start and stop of energy transfer from C11 to C10 may be the intermediate voltage level at C11. By using a difference of V (C11) - V(C10), voltage for comparing with a threshold voltage to start recycling allows to have over all input voltage range the same snubber strength/limitation of voltage peak above V(C10) + V(W10-1) voltage.

The energy transfer from C11 to C10 may be activated deactivated by a microcontroller following a separate algorithm. The recycling of the intermediate snubber voltage energy decreases no load power consumption, increases efficiency and reduces the thermal heat emission.

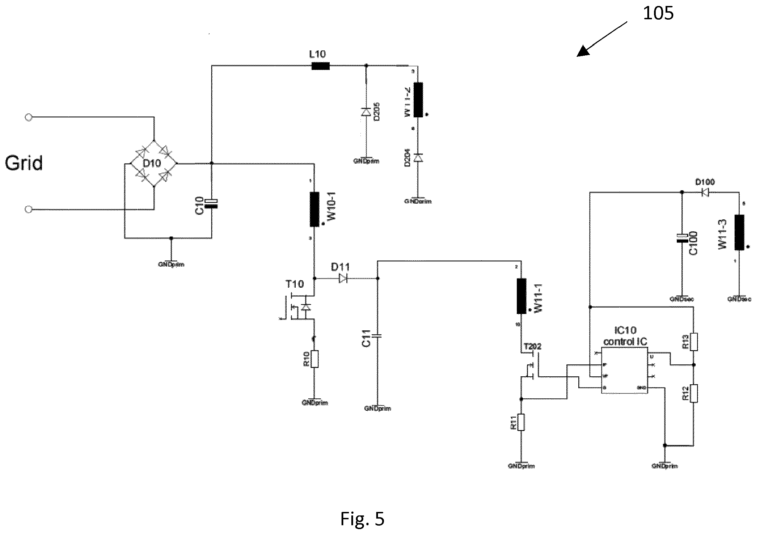

In the fifth embodiment of the present disclosure as shown in FIG. 5, the option of auxiliary supply voltages the energy transfer to C10 can be done using a separate winding on the auxiliary transformer W11-2 having the winding end connected through L10 to C10 positive voltage side while W11-1 winding end is connected to C11 positive voltage side. Here the stored energy from the intermediate capacitor C11 is used to power the auxiliary supply as well as to transfer the energy back (feedback) to the C10 capacitor. This is a hybrid of flyback and forward converter. A forward converter uses normally a ferrite without air gap to not store energy inside the transformer while transferring energy to a secondary side located coil. Here it does transfer energy to a secondary side but at the same time it stores energy inside the transformer and discharges this during flyback discharge time.
The auxiliary SPMS of this embodiment is built in a flyback topology (W11-1, W11-3) to generate the auxiliary supply voltages.The energy transfer to C10 can be done using the same flyback regulation chip (one/the same for both transfers) used for the auxiliary voltage supply. The voltage threshold the energy transfer to C10 from C11 starts is as the intermediate voltage at C11 is transformed W11-1 to W11-2 higher than C10 voltage.

Feedback start condition V(C11) * n(W11 -2)/n(W11 -1) > V(C10).

Several modes can occur: for example:ln mode 1, V(C11) * n(W11-2)/n(W11-1) < U(C10). Thus, there is no active feedback and the power supply behaves in flyback mode. T202 switches to conductive mode and charges W11-1 inductively. The energy level (magnetic field level) inside the W11-1 transformer winding can be set through the shunt resistor R11 whose voltage is sensed by the control IC IC10. As charging is switched off voltage polarity at transformer changes and W11-3 switches D100 and the energy from the transformer is discharged to C100.

In mode 2: V(C11) * n(W11-2)/n(W11-1) > V(C10. Thus there is active feedback and power Flyback operation with parallel feedback through buck. In this mode, T202 switches to conductive mode. W11-2 voltage rises to V(C11) * n(W11-2)/n(W11-1). As a result both L10 and transformer magnetic field is sourced by T202. The current threshold (R11 shunt voltage) T202 switches off stays the same. Therefore, the current is divided to two inductive reservoirs. The buck inductive coil (forward converter) is charged with W11-2 voltage which rises to V(C11) * n(W11-2)/n(W11-1) voltage minus the C10 voltage. The flyback inductive winding W11-1 is charged with V(C11) voltage. Both currents and corresponding magnetic fields rises dependent on inductiveness and applied voltage. As in sum, the current through L10 transferred by W11-2 to W11-1 (I(L10)*n(W11-2)/n(W11-1)) together with the current charging W11-1 inductivity reaches the current threshold the T202 is switched off. As soon as T202 switches off the L10 (Bock Coil) voltage converts to change acting being a consumer/storage to being a source and L10 continues the current sourcing to C10 using the D205 diode as buck diode. Also during the switching off the transformer (W11-1 W11-2 W11-3) acts as a flyback W11-3 voltage converts as well and the transformer is being discharged using D100. The energy is stored in C100.

Next, the regulation procedure will be described in detail. Each time T202 switches on it continues being switched on until the current through the aux SMPSs shunt R11reaches an current resulting in a voltage drop that is above the threshold voltage level of IP pin of IC10. In the discharge period the auxiliary transformer can be run in discontinuous or continuous mode and the forward converter buck L10 can be run in discontinuous or continuous mode. The regulation parameter the auxiliary control IC (IC10) works on is the auxiliary voltage powered by the auxiliary SMPS. As soon as the auxiliary voltage drops below a threshold level the next auxiliary transformer W11-2 charging starts by switching T202 on. The forward controller is not direct but indirect part of this regulation. The current threshold is like written above the same at each switching sequence. The charge of the forward converter buck is like mentioned a function of (a) the difference of the intermediate voltage at C11 transformed by the winding ratio W11-1/W11-2 and the C10 primary voltage and/or (b) the inductivity of L10. Hence, higher the charging voltage of L10, higher energy is transferred to C10 and less energy is stored within flyback part of auxiliary SMPS. Therefore, less energy is discharged to the auxiliary voltage winding which follows, at same consumption situation on the auxiliary voltage, that this voltage drops faster below voltage threshold and new charging sequence starts. This has the effect that the switching frequency in increased. Thus, the amount of energy transferred to C10 rises based on if within one charging-discharging period more energy is transferred to C10 and less to auxiliary and/or if, additionally, based on the raised frequency the energy within a specific time (power) transfer rises as well. As the auxiliary voltage has a minimum load situation during all main SMPS operation modes the auxiliary SMPS has a minimum switching frequency. This means a minimum sampling rate for the transfer of energy from C11 to C10 is also applied. As during pause time of auxiliary SMPS the intermediate voltage rises, it will be reduced latest after minimum sampling time. This together with the main SMPS switching peak energy helps to choose the capacity of C10. The technical effect of this flyback, forward converter combination is the only need of one regulation IC and one switching transistor.

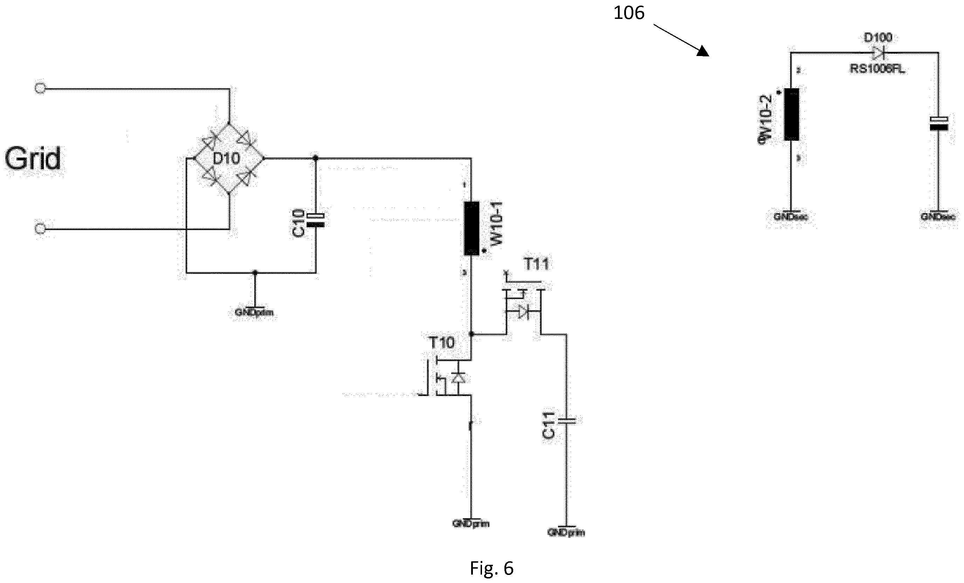

Next the sixth embodiment of the present disclosure will be described with reference to FIG.6. Based on low space requirements the following set up can be used. The main transformer winding W10-1 can be used to recycle the peak energy. Based on the higher voltage level C11 has compared to C10 after the switching peak a transistor (T11) could be used to apply the C11 minus C10 voltage onto W10-1. As this is done during discharge or pause mode of main SMPS the energy is directly transferred to the secondary side capacitor (forward transfer (secondary side leakage inductance acts as forward coil)). The diode inside the transistor acts as intermediate snubber diode during peak event.

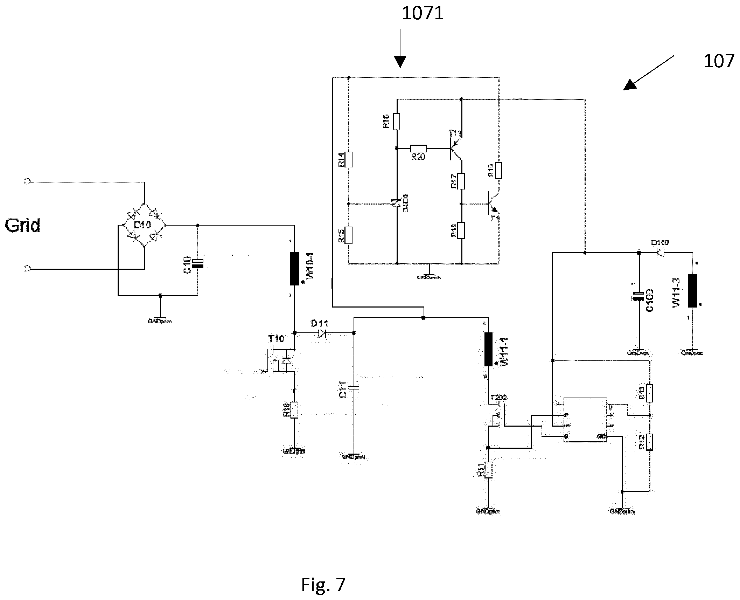

Next the seventh embodiment of the present disclosure will be described. The idea of the snubber on demand is to regulate the limit of the height of the voltage peaks. Snubber on demand may be configured directly on the intermediate voltage as shown in FIG.7. In this realization, a resistor R19 will dependent on the intermediate voltage being divided by R14, R15 and compared by D500 threshold be switched by T1 onto the intermediate C11 voltage. Based on the value of R19 and the regulation behavior of D500, R19 or T1 can act as a load. T1 could be in linear mode or switched completely. Using a simple suppressor or Zener-diode could also be used for voltage limitation.

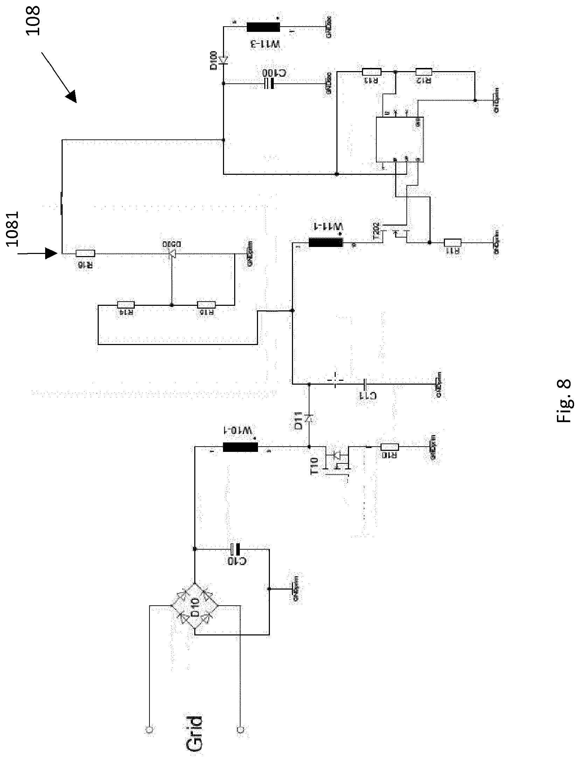

Alternatively, snubber on demand may be configured indirectly on intermediate voltage as shown in FIG.8. The intermediate voltage can be loaded placing a load onto the auxiliary SMPS. The auxiliary SMPS is sourced by the intermediate voltage. Therefore, the auxiliary SMPS added load is loading the source thus the intermediate voltage. The benefit is to have a higher auxiliary SMPS switching frequency which provides an enhanced regulation behavior.

Additionally, the losses that will be created by the load are partially being created by the parts of the auxiliary SMPS, therefore, less parts are needed. Moreover, working at the low voltage side enables the use of smaller parts. The resistor divider R14 R15 together with the internal threshold of D500 switches the D500 internal transistor and adds R16 load onto the auxiliary voltage. This load could be a resistor or a transistor working in linear mode and being set depending on the load needed or it could be a constant voltage load. It shall be appreciated that any combination of the above may also be used.

As used herein, the singular forms "a", "an" and "the" are intended to include the plural forms as well, unless expressly stated otherwise. It will be further understood that the terms "includes," "comprises," "including" and/or "comprising," when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. As used herein, the term "and/or" includes any and all combinations of one or more of the associated listed items.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of this specification and the relevant art, and will not be interpreted in an idealized or overly formal sense unless expressly so defined herein.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the invention without departing from its scope. Dimensions, types of materials, orientations of the various components, and the number and positions of the various components described herein are intended to define parameters of certain embodiments, and are by no means limiting and are merely example embodiments. Many other embodiments and modifications within the scope of the claims will be apparent to those of ordinary skill in the art upon reviewing the above description. The scope of the invention should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, in the following claims, the terms "first," "second," and "third," etc. are used merely as labels, and are not intended to impose numerical requirements on their objects.

While the present disclosure has been particularly shown and described with reference to exemplary embodiments thereof, it will be understood by those skilled in the art that various changes in form and details may be made therein without departing from intent of the disclosure as defined by the appended claims. The exemplary embodiments should be considered in descriptive sense only, and not for purposes of limitation. Therefore, the scope of the present disclosure is defined not by the above description of the invention, but by the appended claims, and all differences within the scope will be construed as being included in the present invention.

**Reference Numerals**

| Reference Numerals | Description |
|---|---|
| 102,103, 104, 105, 106, 107, 108 | Embodiments of SMPS converter circuit according to the invention |
| D11 | Diode for Intermediate energy absorbing circuit |
| C11 | Intermediate energy storage |
| C10 | Main SMPS transformer capacitor |
| W10-1 | Main SMPS transformer primary side |
| R10 | Main SMPS shunt |
| T10 | main SMPS switching transistor |
| W11-1 | Aux SMPS transformer main winding |
| C100 | Capacitor for aux voltage |
| W11-3 | Aux SMPS transformer aux supply winding |
| R12, R13 | Voltage divider |
| R11 | Aux SMPS shunt |
| W11-2 | Aux SMPS transformer feedback winding |
| L10 | Flyback source feedback buck coil |
| D205 | Feedback buck discharge diode |
| W10-2 | Secondary side of main SMPS transformer |
| D500 | Adjustable Shunt Regulator |

## Claims

1. Switch mode power supply (102), SMPS, converter adapted to supply a DC output voltage, comprising:
a main transformer (W10-1) adapted to connect to an input source;
an energy absorbing circuit (D11, C11) connected to a primary winding of the main transformer, wherein the energy absorbing circuit comprises a diode and a capacitor connected in series;
an auxiliary SMPS connected to the energy absorbing circuit;
wherein the auxiliary SMPS is powered by the energy stored in the energy absorbing circuit.

2. SMPS converter (102) according to claim 1, arranged according to a flyback topology comprising the main transformer and a switch (T10) connected in series to a primary winding of the main transformer.

3. SMPS converter (107) according to claim 1, comprising an on-demand snubber circuit comprising:
a voltage measuring circuit (1071) comprising a potential divider connected to an adjustable shunt regulator to measure the inductive switching peak voltages in the primary winding of the main transformer and/or the voltage on the energy storage device, wherein the adjustable shunt regulator connected to a first transistor, and wherein the first transistor connected to a second transistor, wherein a resistive load is connected to a collector of the second transistor.

4. SMPS converter (108) according to claim 1, further comprising
an on-demand snubber circuit,
a voltage measuring circuit (1081) comprising a potential divider connected to an adjustable shunt regulator to measure the inductive switching peak voltages in the primary winding of the main transformer (W10-1) and/or the voltage on the energy storage device, wherein the adjustable shunt regulator is connected to a resistive load or a transistor working in linear mode being set depending on the load needed or a constant voltage load.

5. SMPS converter (104) according to claim 1, wherein the energy of the energy absorbing circuit (D11, C11) is fed back to the primary winding of the main transformer (W10-1) of the SMPS converter.

6. SMPS converter (104) according to claim 1, wherein the energy of the energy absorbing circuit (D11, C11) is fed back to the primary winding of the main transformer (W10-1) through a secondary winding of the auxiliary SMPS (W11-2).

7. SMPS converter (105) according to claim 1, wherein the second secondary winding of the auxiliary SMPS (W11-2) is connected to an inductive element (L10), wherein the inductive element is a feedback buck coil and a feedback buck discharge diode is connected in parallel to the secondary winding of the auxiliary SMPS.

8. SMPS converter (106) according to claim 2, wherein the energy of the energy absorbing circuit is fed to a secondary winding of the main transformer (W10-2) through a bidirectional switch (T11) in the energy absorbing circuit instead of a diode.

9. SMPS converter (102, 103) supplying a DC output voltage to a load, comprising:
an AC source connected to a full bridge rectifier (D10), wherein an output voltage from the full bridge rectifier is filtered by a main DC capacitor connected to the main transformer;
a flyback topology, comprising the said main transformer (W10-1) and a switch (T10) connected in series to the main transformer;
wherein the said flyback topology is adapted to perform DC to DC conversion and supplying regulated DC voltage to the load; and
an energy absorbing circuit (D11, C11), comprising a diode and a capacitor, connected in series with the primary winding of the main transformer of the flyback topology and in parallel with the power converter switch.

10. SMPS converter (103, 104, 105, 107, 108) according to claim 9, wherein the energy stored in the energy absorbing circuit acts as an additional energy source for an auxiliary SMPS circuit, the auxiliary SMPS circuit comprising:
an auxiliary SMPS main transformer (W11-1) adapted to receive energy from the energy absorbing circuit; and
a power electronic switch T202 connected in series with a primary winding auxiliary SMPS main transformer, to control the amount of energy flowing into the auxiliary main transformer according to the voltage value present on the capacitor of the of the energy storage device.

11. SMPS converter (104, 105) according to claim 10, wherein the energy stored in the energy absorbing circuit is fed back into the said main DC capacitor through a third auxiliary transformer (W11-2).
